Europäisches Patentamt

European Patent Office

Office européen des brevets

(19)

(11) Veröffentlichungsnummer : **0 093 904**
**B1**

(12) # EUROPÄISCHE PATENTSCHRIFT

(45) Veröffentlichungstag der Patentschrift :
22.10.86

(51) Int. Cl.⁴ : **H 04 N 9/68**

(21) Anmeldenummer : **83103835.1**

(22) Anmeldetag : **20.04.83**

(54) **Verfahren zur Begrenzung des Strahlstromes in der Bildröhre eines Fernsehempfängers.**

(30) Priorität : **06.05.82 DE 3216909**

(43) Veröffentlichungstag der Anmeldung :
**16.11.83 Patentblatt 83/46**

(45) Bekanntmachung des Hinweises auf die Patenterteilung : **22.10.86 Patentblatt 86/43**

(84) Benannte Vertragsstaaten :
**AT CH FR IT LI SE**

(56) Entgegenhaltungen :
**FR-A- 2 173 095**
**FR-A- 2 454 733**
**FUNKSCHAU, Band 51, Nr. 12, 8. Juni 1979, Seiten
675-678, München, DE, E. GUBLASS: "Bildröhrenansteuerung mit automatischer Dunkelstrom-Regelung"**

(73) Patentinhaber : **Deutsche Thomson-Brandt GmbH
Hermann-Schwer-Strasse 3 Postfach 2060
D-7730 Villingen-Schwenningen (DE)**

(72) Erfinder : **Rufray, Jean-Claude
Unot-Weg 1a
D-7730 VS-Tannheim (DE)**
Erfinder : **Pery, Antoine
Freiburger-Strasse 3/1
D-7730 Villingen-Schwenningen (DE)**

## Beschreibung

### Stand der Technik

Die Erfindung geht aus von einem Verfahren zur Begrenzung des Strahlstromes in der Bildröhre eines Fernsehempfängers. Zwecks richtiger Wiedergabe des Farbeindrucks für Weiß müssen die drei Strahlströme in einem ganz bestimmten Verhältnis zueinander eingestellt werden, dies hängt z. B. vom Wirkungsgrad der verschiedenen Leuchtphosphore ab.

Es ist z. B. bekannt, zwecks automatischer Einstellung des Weißwertes auf dem Bildschirm einer Farbbildwiedergaberöhre in den unsichtbaren Teil des Bildhinlaufs während der Dauer mehrerer Zeilen Bezugssignale für jede Farbe einzublenden, auf die sich eine Regelanordnung einstellt, indem in einer Regelschleife am Ausgang der Videostufe die Bezugssignale detektiert werden und mit dieser Information die Gesamtverstärkung konstant gehalten wird.

Es ist auch bekannt zum Schutz der Fensehbildröhre eine Begrenzung des Strahlstromes einzuführen. Dies geschieht in üblicher Weise dadurch, daß am Fußpunktwiderstand der Hochspannungskaskade eine Spannung abgegriffen wird, mit welcher ab einer bestimmten Größe der Kontrast und/oder die Helligkeit des Bildes heruntergeregelt wird.

In der Zeitschrift « Funkschau », Bd. 51, Nr. 12, 8.6.1979, Seiten 675-678 wird eine Schaltung beschrieben, die bei einem erhöhten Strahlstrom den Kontrast automatisch herabregelt, indem die Verstärkung des Leuchtdichteverstärkers herabgesetzt wird. Als Kriterium dient der Spannungsabfall, der durch den Strahlstrom an einem Meßwiderstand erzeugt wird. Die zur Weißwerteinstellung in das Sendesignal eingeblendeten Bezugspegel werden nicht verändert.

Bei IC-Schaltungen der neueren Generation wird die Kontrasteinstellung digital verändert und zwar unter Verwendung von Analog-Digital-Umsetzern. Die Information aus dem mittleren Strahlstrom liegt jedoch nur in analoger Form vor. Um auf eine digitale Schaltung einzuwirken, muß diese analoge Information zunächst in eine digitale Information umgewandelt werden. Diese Maßnahme ist jedoch ziemlich aufwendig und umständlich. Um dies zu vermeiden, muß der Strahlstrom mit Hilfe der Verstärkung des Videokanals verändert werden, so daß Kontrast und Helligkeit gleichzeitig reduziert werden, wenn der Strahlstrom übermäßig ansteigt. Bei der weiter oben beschriebenen Schaltungsanordnung ist es jedoch nicht möglich, durch Verändern des Gleichspannungspegels am Steuereingang des VCA (Voltage Controlled Amplifier) die Verstärkung zu ändern, da durch die beschriebene Regelschleife der Weißwert, d. h. die drei Strahlströme ·konstant gehalten werden, so daß eine Reduzierung des Strahlstroms hierdurch nicht möglich wird.

### Aufgabe

Der Erfindung liegt nun die Aufgabe zugrunde, eine Lösung zur Begrenzung des Strahlstoms in einer Bildwiedergaberöhre zu schaffen, welche in dieses vorhandene IC-Konzept passt und für eine integrierte Schaltung geeignet ist. Diese Lösung besteht in einem Verfahren mit den im Kennzeichen des Hauptanspruchs angegebenen Maßnahmen.

### Beschreibung

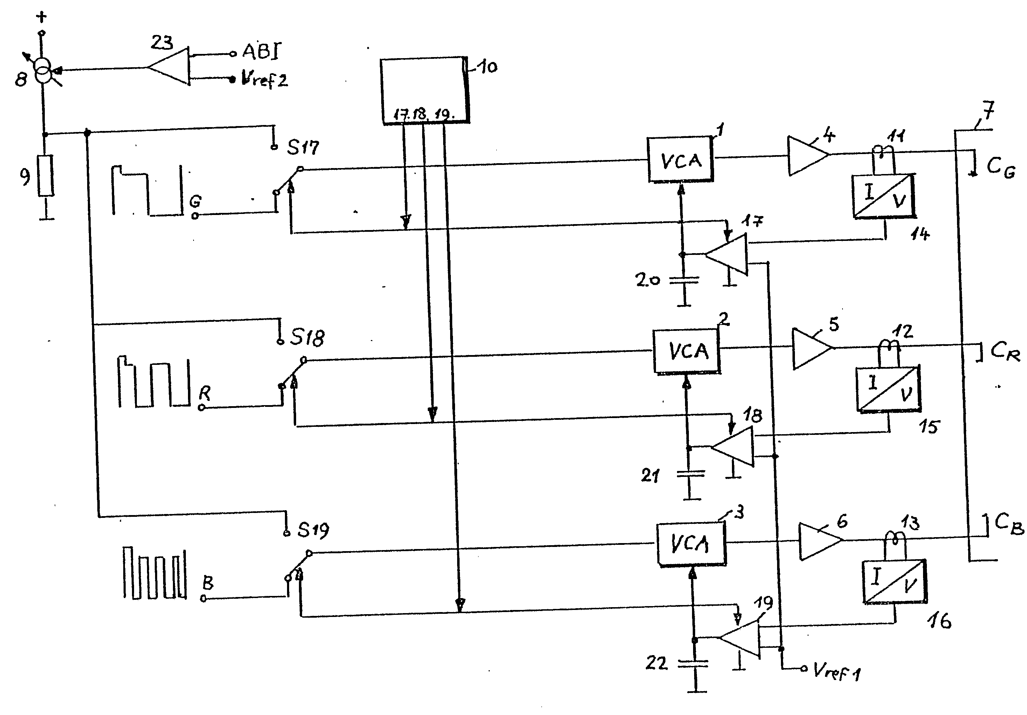

Nachstehend soll an einem Ausführungsbeispiel die Wirkungsweise der Erfindung mit Hilfe der Zeichnung näher beschrieben werden.

Die Signale für RGB gelangen an die Eingänge der VCA 1, 2 und 3, von wo sie verstärkt an die Eingänge der Endstufen 4, 5 und 6 geschaltet sind, welche die Strahlströme für die Kathoden CG, CR, CB einer Bildröhre 7 liefern. Die jeweiligen Strahlströme werden zur Erhaltung eines optimalen Weißwertes automatisch konstant gehalten. Dies geschieht folgendermaßen : Während jedes Halbbildes wird für jede Farbe getrennt in drei aufeinanderfolgenden unsichtbaren Zeilen ein Gleichspannungspegel eingeblendet. Dieser Pegel wird z. B. mit Hilfe einer einstellbaren Konstantstromquelle 8 an einem Widerstand 9 erzeugt. Während der Dauer von bestimmten Zeilen wird mit Hilfe einer Zählschaltung 10 z. B. während der 17ten Zeile der Pegel für das rote, während der 18ten Zeile der Pegel für das grüne und während der 19ten Zeile der Pegel für das blaue Signal mit Hilfe der Schalter S 17, S 18, bzw. S 19 den Video-Verstärkern 1,4 ; 2,5 ; 3,6 zugeführt. Während dieser erwähnten Zeiten wird der Strahlstrom jedes Systems über Fühler 11, 12 und 13 gemessen und diese Information wird dann mit Hilfe von Wandlern 14, 15 und 16 in eine analoge Spannung umgewandelt. Der sich daraus ergebende Wert wird in einer Komparatorschaltung 17, 18 und 19 mit einer Referenzspannung Uref 1 verglichen. Die Komparatoren 17, 18 und 19 werden über den Zähler 10 aktiviert. Es ergibt sich ein Spannungswert an den Kondensatoren 20, 21 und 22, so daß die VCA 1, 2 und 3 auf einen konstanten Verstärkungsgrad geregelt werden, der während des gesamten Halbbildes konstant bleibt. Die Verstärkungsgrade KG, KR und KB sind in den verschiedenen Regelschleifen durch die unterschiedliche Dimensionierung der Konverterstufen nicht gleich, so daß die den Komparatoren zugeleiteten und von den Konvertern umgesetzten Spannungen verschieden sind : $V_G = K_G \cdot I$, $V_R = K_R \cdot I$, $V_B = K_B \cdot I$. Es ergeben sich dadurch unterschiedliche Gesamtverstärkungsgrade der drei Kanäle $KG' = \alpha KR' = \beta KB'$. Ohne die Wirkungsweise dieser Schaltung zu beeinträchtigen, geht die Erfindung von der Erkenntnis aus, daß zur Begrenzung des mittleren Strahlstromes die Verstärkung im gleichen Verhältnis veringert werden muß, z. B. um den Faktor δ. Hierzu wird eine Information ABI aus dem mittleren Strahlstrom abgenommen und mit einer Referenz Uref 2 im Differenzverstärker 22 verglichen. Das daraus resultierende Signal verändert den Pegel am Widerstand 9. Wenn dieser erhöht wird, versucht die jeweilige Regelschleife die Verstärkung konstant zu halten, d. h. die Gesamtverstärkungsfaktoren KG′, KR′, KB′ der einzelnen Verstärkerkanäle werden gemeinsam im gleichen Verhältnis verändert, z. B. in $\delta KG' = \delta\alpha KR' = \delta\beta KB'(\delta<)$ wodurch der mittlere Strahlstrom absinkt.

Die Erfindung bringt den Vorteil, daß Abgleichvorgänge bei der Gerätefertigung wesentlich reduziert werden können.

## Patentanspruch

Verfahren zur Begrenzung des Strahlstromes in der Bildröhre eines Farbfernsehempfängers, wobei zur automatischen Arbeitspunkteinstellung der Videoverstärkerstufe (1,4 ; 2,5 ; 3,6) für die Farben Rot, Grün und Blau mit Hilfe einer Steuerschaltung (10) während mehrerer Zeilen des unsichtbaren Teils des Bildhinlaufs Bezugspegel zeitlich hintereinander über Schalter (S17, S18, S19), die von der Steuerschaltung nacheinander geschlossen werden, an die Eingänge der Videoverstärkerstufen gelegt werden und am Ausgang der Videoverstärkerstufen während der Dauer der angelegten Bezugspegel ein Signal abgenommen wird, aus dem ein Verstärkungsregelungssignal für jede Videoverstärkerstufe erzeugt wird, welches für die Dauer des sichtbaren Bildhinlaufes wirksam ist und dadurch die Verstärkung der Videoverstärkerstufen auf einen konstanten Wert gehalten wird, wobei von dem mittleren Strahlstrom der Bildröhre ein Signal zur Begrenzung des Strahlstromes abgeleitet wird, dadurch gekennzeichnet, daß die Information (ABI) für den mittleren Strahlstrom in einer Differenzverstärkerstufe (23) mit einer Referenzspannung ($V_{ref}$) verglichen wird und die Ausgangsspannung dieser Differenzverstärkerstufe (23) von einem bestimmten die Referenzspannung übersteigenden Wert des mittleren Strahlstromes ab den Strom einer Konstantstromquelle (8), der an einem Widerstand (9) den einzublendenden Bezugspegel erzeugt, in der Weise erhöht, daß die auf den erhöhten Bezugspegel ansprechende automatische Verstärkungsregelung die Gesamtverstärkungsgrade der einzelnen Endverstärker (1,4 ; 2,5 ; 3,6) gemeinsam im gleichen Verhältnis vermindert werden.

## Claim

Method for the limiting of the cathode-ray current in the picture tube of a colour television receiver, in which, for the automatic operating point adjustment of the video amplifier stages (1,4 ; 2,5 ; 3,6) for the colours red, green and blue with the aid of a control circuit (10) during a plurality of lines of the invisible part of the forward picture stroke, there are applied successively in time to the inputs of the video amplifier stages reference levels by means of swtiches (S17, S18, S19) which are successively closed by the control circuit, and during the application of the reference levels there is taken off a signal from which is produced for each video amplifier stage an amplification control signal which is effective for the duration of the visible forward picture stroke so that the amplification of the video amplifier stages is maintained at a constant value, in which for limiting the cathode-ray current a signal is derived from the average cathode-ray current of the picture tube, characterised in that the information (ABI) for the average cathode-ray current is compared in a differential amplifier stage (23) with a reference voltage ($V_{ref}$), and the output voltage of this differential amplifier stage (23), from a predetermined value onwards of the average cathode-ray current, which value exceeds the reference voltage, raises in such a way the current of a constant-current source (8) which produces the reference level to be introduced at a resistor (9) that the automatic amplification control actuated by the raised reference level decreases the overall amplification factors of the individual output amplifiers (1,4 ; 2,5 ; 3,6) in common in the same ratio.

## Revendication

Procédé de limitation du courant de faisceau électronique dans le tube-image d'un récepteur de télévision en couleur, selon lequel, pour un réglage automatique du point de fonctionnement des étages d'amplificateur vidéo (1,4 ; 2,5 ; 3,6) pour les couleurs rouge, verte et bleue, on assure à l'aide d'un circuit de commande (10), pendant plusieurs lignes de la partie invisible de l'ensemble d'image, une application de niveau de référence se succédant temporellement, par l'intermédiaire d'interrupteurs (S17, S18, S19) qui sont fermés successivement par le circuit de commande, aux entrées des étages d'amplificateur vidéo et on obtient à la sortie des étages d'amplificateur vidéo, pendant la durée d'application du niveau de référence, un signal à partir duquel est produit un signal de régulation d'amplification pour chaque étage d'amplificateur vidéo, ce signal agissant pendant la durée de l'ensemble d'image visible et maintenant ainsi l'amplification des étages d'amplificateur vidéo à une valeur constante, tandis qu'un signal servant à la limitation du courant de faisceau est obtenu à partir du courant moyen de faisceau du tube-image, caractérisé en ce que l'information (ABI) concernant le courant moyen de faisceau est comparée dans un étage d'amplificateur de différence (23) avec une tension de référence ($V_{ref}$) et la tension de sortie de cet étage d'amplificateur de différence (23) augmente à partir d'une valeur déterminée, supérieure à la tension de référence, du courant moyen de faisceau, le courant d'une source de courant constant (8), qui produit dans une résistance (9) le niveau de référence à appliquer, de manière que la régulation automatique d'amplification se produisant en fonction de l'augmentation du niveau de référence réduise en commun dans la même proportion les degrés d'amplification totale des différents amplificateurs finaux (1, 4 ; 2,5 ; 3,6).

0 093 904